# EUROPÄISCHE PATENTANMELDUNG

(11) **EP 3 644 039 A1**
(43) Veröffentlichungstag der Anmeldung: **29.04.2020**
(21) Anmeldenummer: 19203043.5
(22) Anmeldetag: 14.10.2019
(51) Int. Cl.: G01N 1/28, G01N 1/32, B01L 9/00, B24B 29/00, B24B 37/30

(54) **PROBENHALTERVORRICHTUNG FÜR EINE SCHLEIFEINRICHTUNG UND VERFAHREN ZUM HERSTELLEN EINER MIKROSKOPISCH PLANEN EBENE AN EINER PROBE**

(30) Priorität: 26.10.2018 DE 102018126749
(71) Anmelder: Deutsches Zentrum für Luft- und Raumfahrt e.V., 51147 Köln (DE)
(72) Erfinder: HEIDENREICH, Bernhard Dipl.-Ing., 71679 Asperg (DE); REICHARTZ, Thorsten, 52072 Aachen (DE)
(74) Vertreter: Fleck, Julia Maria

(57) **Zusammenfassung**

Die Erfindung betrifft eine Probenhaltervorrichtung (1) für eine Schleifeinrichtung, mit einem bezüglich einer Mittelachse (M) ausgerichteten Grundkörper (10), der eine zu einer Oberseite (12) hin geöffnete Vertiefung (15) mit einem Probeaufnahmeraum (16) umfasst, und mit einer Spannvorrichtung (30) zum Verspannen einer Probe (50) in dem Probeaufnahmeraum (16), wobei an der Oberseite (12) des Grundkörpers (10) zumindest ein Aufsetzelement (20) zum Aufsetzen auf eine Schleifscheibe während des Schleifvorgangs lösbar angeordnet ist. Eine Probenhaltervorrichtung, mittels der auch empfindliche und/oder kleinvolumige Proben geschliffen werden können, ist dadurch erhältlich, dass in dem Probeaufnahmeraum (16) eine axial verstellbare Tiefenanschlagvorrichtung (40) mit zumindest einer Tiefenanschlagfläche (41) zur axialen Positionierung der Probe (50) vorhanden ist (Fig. 1A).

## Beschreibung

Die Erfindung betrifft eine Probenhaltervorrichtung für eine Schleifeinrichtung, mit einem bezüglich einer Mittelachse ausgerichteten Grundkörper, der eine zu einer Oberseite hin geöffnete Vertiefung mit einem Probeaufnahmeraum umfasst, und mit einer Spannvorrichtung zum Verspannen einer Probe in dem Probeaufnahmeraum, wobei an der Oberseite des Grundkörpers zumindest ein Aufsetzelement zum Aufsetzen auf eine Schleifscheibe während des Schleifvorgangs lösbar angeordnet ist. Die Erfindung betrifft ferner ein Verfahren zum Herstellen einer mikroskopisch planen Ebene an einer Probe.

Zu Materialforschungszwecken ist es üblich, Materialproben mit einem Mikroschliff zu versehen, um deren Gefüge bzw. Mikrostruktur mikroskopisch untersuchen zu können. Eine gängige Vorgehensweise besteht in der Einbettung sogenannter Schliffproben in einem Kunststoffkörper aus Einbettharz. Alternativ können die Proben auf einem Träger aufgeklebt werden. Anschließend werden die Proben, gegebenenfalls in mehreren Schritten, geschliffen, um die Oberfläche für die Betrachtung unter einem Licht- oder Elektronenmikroskop vorzubereiten. Steht zur Mikroskopie nur wenig Raum zur Verfügung, wie z. B. bei Untersuchung der Mikrostrukturentwicklung in Abhängigkeit der Temperatur mittels einer Heizkammer, können mechanisch bzw. temperaturstabile Proben durch Aufbrechen bzw. durch Erhitzen des Einbettharzes aus dem Kunststoffkörper herausgelöst bzw. von dem Träger abgenommen werden.

Nachteile ergeben sich bei (insbesondere mechanisch und/oder temperatur-) empfindlichen Proben, wie beispielsweise kohlenstofffaserverstärkten Kunststoffen (CFK) oder porösen Werkstoffen, wie z. B. kohlenstofffaserverstärktem Kohlenstoff (C/C). Diese können aus dem Träger nicht ohne Beschädigung herausgelöst werden. Bei einem Aufkleben einer derartigen Probe kann der Kleber in das Probenmaterial eindringen und deren Mikrostruktur beeinflussen.

Es besteht daher Bedarf an einem Probenhalter, mittels dessen Proben ohne Einbetten gehalten und mittels einer Schleifeinrichtung bzw. Poliermaschine geschliffen und/oder poliert werden können. Ein derartiger Probenhalter, von dem auch die vorliegende Erfindung ausgeht, ist beispielsweise aus der DE 10 2012 017 662 A1 bekannt. Dabei dienen mehrere auswechselbare Opfer-Anschlagelemente an der Oberseite des Probenhalters dazu, eine definierte Schliffebene an der Probe zu erhalten. Es hat sich jedoch herausgestellt, dass dieser bekannte Probenhalter nicht für das Schleifen (mechanisch bzw. temperatur-) empfindlicher und/oder kleinvolumiger Proben geeignet ist, da sich insbesondere beim Verspannen der Probe und/oder beim Schleifvorgang ein hohes Risiko einer Zerstörung der Probe ergibt und/oder die Probe nicht geeignet verspannbar ist.

Weitere Probenhalter zum Halten einer Probe ohne Einbetten für eine Schleifeinrichtung sind aus der DE 695 28 630 T2 und der G 90 10 700 U1 bekannt. Bei diesen bekannten Probenhaltern kann sich die exakte Bearbeitung schwierig gestalten, u. a. deswegen, weil kein Aufsetzelement vorhanden ist. Dies führt zu einer hohen, axialen Druckbelastung der Probe durch den Schleifdruck, der umso höher wird, je kleiner die zu schleifende Oberfläche der Probe ist. Der hohe Schleifdruck führt zu hohen Abtragsraten der Probe und schlechten Schliffqualitäten, z. B. durch Materialaus-brüche innerhalb den Probenflächen, insbesondere bei porösen Proben. Weiterhin besteht die Gefahr, die Probe durch den hohen Anpressdruck zu zerstören.

Der vorliegenden Erfindung liegt die Aufgabe zugrunde, eine Probenhaltervorrichtung und ein Verfahren zum Herstellen einer mikroskopisch planen Ebene an einer Probe bereitzustellen, mittels der bzw. dem auch empfindliche Proben z. B. bestehend aus CFK-Materialien und/oder kleinvolumige Proben exakt und mit möglichst wenig Aufwand geschliffen werden können.

Die Aufgabe wird für die Probenhaltervorrichtung mit den Merkmalen des Anspruchs 1 und für das Verfahren mit den Merkmalen des Anspruchs 12 gelöst. Bezüglich der Probenhaltervorrichtung ist vorgesehen, dass in dem Probeaufnahmeraum eine axial verstellbare Tiefenanschlagvorrichtung mit zumindest einer Tiefenanschlagfläche zur axialen Positionierung der Probe vorhanden ist.

Die Tiefenanschlagvorrichtung kann ein insbesondere längliches Tiefenanschlagelement umfassen, dem die Tiefenanschlagfläche zugeordnet sein kann. Durch das Vorhandensein der axial verstellbaren Tiefenanschlagvorrichtung kann zum einen der Probeaufnahmeraum für Proben unterschiedlicher Größen, auch kleinvolumiger Art (alle Abmessungen z. B. kleiner gleich 10 mm), genutzt werden, wobei eine zu schleifende Seite der Probe vergleichsweise genau axial vorpositionierbar ist. Über die Tiefenanschlagvorrichtung kann vorteilhaft eine Anpresskraft der Schleifeinrichtung, durch die die Probenhaltervorrichtung beim Schleifen in axialer Richtung auf eine Schleifscheibe gedrückt wird, zumindest teilweise bzw. überwiegend axial parallel und entgegengerichtet kompensiert werden. So kann vorteilhaft die auf die Probe wirkende Kraft zur Kompensation der Anpresskraft geringer gehalten werden als bei alleinigem Aufbringen einer Kompensationskraft auf andere Weise bzw. aus einer anderen Richtung, z. B. durch Reibschluss durch Verspannen der Probe senkrecht zur axialen Anpresskraft.

In einer einfach zu montierenden und materialsparenden Ausbildung kann die Tiefenanschlagfläche durch die Stirnseite einer Schraube gebildet sein, wobei das Tiefenanschlagelement durch eine Schraube gebildet sein kann. Möglich ist auch eine Tiefenanschlagfläche als gesondertes, z. B. an dem Tiefenanschlagelement bzw. der Schraube angeordnetes, Flächenelement, das bei der Fertigung eine bedarfsoptimierte Formgebung, z. B. angepasst an den Probeaufnahmeraum, erlaubt. Vorzugsweise kann das Tiefenanschlagelement als Madenschraube ausgebildet sein. So kann auf der Unterseite des Grundkörpers bei dem Schleifvorgang der Anpressdruck mittels einer Anpressvorrichtung der Schleifeinrichtung ungehindert aufgebracht werden.

Vorzugsweise ist das mindestens eine Aufsetzelement großflächig ausgebildet, wobei eine nach oben gerichtete, d. h. von der Oberseite abgewandte Schleiffläche des Aufsetzelements größer als 80 %, insbesondere größer als 200 %, einer Schleiffläche der Probe ausgebildet ist. Bei mehreren Aufsetzelementen bezieht sich die Größenangabe auf die Summe der Schleifflächen. Durch eine derartige großflächige Ausbildung ergibt sich vorteilhaft eine große Gesamtfläche, wodurch der Anpressdruck, d. h. die durch die Schleifeinrichtung aufgebrachte Kraft pro Fläche, verringert wird. Weiterhin kann der Anpressdruck unabhängig von der Größe der Schleiffläche der Probe weitgehend konstant gehalten werden. Somit kann der Druck auf die Probe vergleichsweise gering gehalten und einer Zerstörung der Probe entgegengewirkt werden. So lässt sich die Probenhaltervorrichtung vorteilhaft auch für empfindliche Proben verwenden. Zudem kann ein Verkippen des Probenhalters während des Schleifens und damit ein schräges Anschleifen der Probe verhindert werden.

Vorteilhafterweise sind zumindest zwei, vorzugsweise auch maximal zwei, Aufsetzelemente vorhanden, die derart angeordnet sind, dass sie die Öffnung der Vertiefung aussparen. Die Aussparung der Öffnung erlaubt ein einfaches Einsetzen der Probe, insbesondere wenn die Vertiefung auch offene (beispielsweise an einer Umfangsfläche offen angrenzende) Seiten aufweist. Wenn maximal zwei Aufsetzelemente vorhanden sind, erleichtert dies das Anbringen, da lediglich zwei Aufsetzelemente zu positionieren und zu befestigen sind.

Eine einfache Handhabbarkeit der Probehaltervorrichtung, wie das Aufsetzen und/oder das Abnehmen des Aufsetzelements, gegebenenfalls mittels einer Greifvorrichtung wie Pinzette oder Zange, ist dadurch erreichbar, dass das bzw. die Aufsetzelement/e aus einem Material weicher als die Probe, insbesondere aus einem Kunststoff, ausgebildet ist/sind. Weiterhin ergeben sich Kosten- und Herstellungsvorteile, wobei beispielsweise Spritzgieß- oder 3-D-Druckverfahren anwendbar sind.

In einer bevorzugten Ausbildungsvariante weist/weisen das bzw. die Aufsetzelement/e vor dem ersten Schleifvorgang eine Dicke von 0,5 mm bis 5 mm, vorzugsweise von 1 mm bis 4 mm, z. B. zwischen 1 mm und 2 mm, auf. Die minimale Dicke ist derart, dass sich ausreichend Verschleißmaterial ergibt, sodass das bzw. die Aufsetzelement/e während zumindest eines Schleifvorgangs nicht vollständig abgetragen wird/werden. Insbesondere können Unebenheiten beim Einspannen der Probe durch einen "Anschliff" ausgeglichen und zunächst eine gleichmäßige Schliffebene hergestellt werden. Die maximale Dicke hängt von der Art, insbesondere den Maßen und der Stabilität bzw. Beschaffenheit, der Probe ab: Die maximale Dicke sollte derart sein, dass ein sicheres Einspannen der Probe gewährleistet ist, wobei die Probe z. B. mit mindestens 3 mm in die Vertiefung hineinragt. Bei sehr kleinen Proben könnte im Extremfall auf die Aufsetzelemente verzichtet werden. Zudem sollte die maximale Dicke derart sein, dass ein maximal möglicher, materialabhängiger Überstand der Probe über die Oberseite des Grundkörpers nicht überschritten wird, um einen zerstörungsfreien Schleifvorgang der Probe zu gewährleisten. Unter Berücksichtigung dieser Kriterien bringen vergleichsweise dicke Aufsetzelemente, z. B. bis 5 mm, mit vergleichsweise geringem Auswechselbedarf entsprechend wirtschaftliche Vorteile.

Vorteilhafte Montagemöglichkeiten ergeben sich, wenn das bzw. die Aufsetzelement/e mittels Presspassverbindung oder einer formschlüssigen Verbindung, z. B. einer Klickverbindung, (mit elastisch verformbaren, federnden Eingriffselementen als Verbindungsstrukturen), an dem Grundkörper lösbar befestigt ist/sind. Dazu sind betreffende Verbindungsstrukturen an dem bzw. den Aufsetzelement/en und dem Grundkörper vorhanden. Beispielsweise sind an dem Aufsetzelement ein oder mehrere Eingriffelement/e als Außenumfangskonturen und an dem Grundkörper entsprechende komplementäre Gegenelemente mit komplementären Innenumfangskonturen ausgebildet, oder umgekehrt, die ineinandergreifen. Dadurch ist eine einfache Art der Befestigung, z. B. bei der Presspassverbindung ähnlich dem Klemmbausteinprinzip, ermöglicht. Bei Bedarf, insbesondere nach einem Schleifvorgang, ist die Verbindung z. B. mittels eines Greifwerkzeuges wie Zange oder Pinzette, einfach wieder lösbar. Dabei kann es für eine einfache Handhabbarkeit vorteilhaft sein, wenn das Aufsetzelement aus Kunststoff ausgebildet ist.

In einer bevorzugten Ausbildungsvariante weist die Spannvorrichtung Spannmittel und ein flächiges Spannelement auf, die derart angeordnet sind, dass eine flächige Spannkraft auf die Probe orthogonal zu einer ebenen, insbesondere rechtwinklig zu der Schliffebene liegenden, Seitenwand des Probeaufnahmeraums aufbringbar ist. Insbesondere kontaktiert die flächige Seite des Spannelements die flächige Seite der Probe. Das flächige Spannelement ist insbesondere in Art einer Spannbacke ausgebildet, und kann vor Verspannen der Probe lose oder vormontiert an dem Grundkörper (z. B. an den Spannmitteln) vorhanden sein. Mittels des Spannelements ist die Probe durch Aufbringen einer Spannkraft über die Spannmittel z. B. gegen eine der Seitenwände als Gegenfläche spannbar, wobei zwischen dem Spannelement und der entsprechenden Seitenwand der - dadurch in der Breite veränderliche - Probenaufnahmeraum gebildet ist. Das Spannelement ist zumindest derart flächig ausgebildet, dass die Spannkraft auf die Probe flächig verteilt wird, um den einwirkenden Druck zu verringern und so eine Zerstörung der Probe, insbesondere ein Zerdrücken, zu vermeiden. Ferner ist das Spannelement vorzugsweise aus einem derart harten Material, z. B. aus Stahl, ausgebildet, dass es die Spannkraft der Spannmittel flächig auf die Probe übertragen kann. Die Spannkraft lässt sich so orthogonal zu dem Anpressdruck der Schleifeinrichtung aufbringen. Eine derartige Ausbildung der Spannvorrichtung erlaubt die Verwendung der Probenhaltervorrichtung mit kleinvolumigen und/oder empfindlichen Proben (Maße aller drei Dimensionen < 10 mm, beispielsweise 7 mm x 5 mm x 3 mm).

Wenn das flächige Spannelement auf der in Richtung Tiefenanschlagfläche weisenden Seite eine Aussparung aufweist, in die die Tiefenanschlagfläche parallel zu der Mittelachse axial hineinverstellbar ist, kann vorteilhaft eine Begrenzung der Breite des Probeaufnahmeraums durch Anschlagen des flächigen Spannelements an die Tiefenanschlagfläche bzw. das Tiefenanschlagelement verhindert werden. Auf diese Weise kann die Begrenzung des Einsatzes der Probenhaltervorrichtung hinsichtlich der Breite bzw. Dicke einer Probe reduziert bzw. vermieden werden.

Ein leichtes Einsetzen der Probe in den Probenaufnahmeraum lässt sich dadurch bewerkstelligen, dass die Vertiefung länglich ausgebildet ist und zumindest nach einer Seite zu der Umfangsseite des Grundkörpers hin geöffnet ist. Die Vertiefung kann z. B. länglich, als Nut, ausgebildet sein, die insbesondere nach ihren beiden auf die Umfangsseiten weisenden bzw. an die Umfangsfläche des Grundkörpers angrenzenden Seiten offen ausgebildet ist. Vorteilhaft für ein gleichmäßiges Schleifergebnis kann die Vertiefung z. B. symmetrisch in den Grundkörper eingebracht sein.

Eine vorteilhafte Kräfteverteilung mit einer vergleichsweise geringen Krafteinwirkung auf die Probe während des Schleifvorgang ist dadurch erreichbar, dass in der Ebene der Oberseite des Grundkörpers das Verhältnis einer Oberseitenfläche des Grundkörpers zu der Größe der Öffnung der Vertiefung mindestens 1 : 1, vorzugsweise mindestens 2 : 1, z. B. 2,9 : 1, beträgt und dass in montiertem Zustand das Aufsetzelement 50 %, z. B. zumindest 70 % oder zumindest 90 % der Oberseitenfläche abdeckt. Die Oberseite ist von der Öffnung der Vertiefung und der daran angrenzenden Oberseitenfläche des Grundkörpers gebildet. Optimiert wird diese Wirkung, wenn die Flächengröße des Aufsetzelements (oder ggf. der Aufsetzelemente) in Summe im Wesentlichen der Flächengröße der Oberseitenfläche (d. h. Oberfläche abzüglich Öffnung der Vertiefung) entspricht. So kann beispielsweise das Verhältnis der Schleiffläche des Aufsetzelements zu der Größe der Öffnung der Vertiefung 2,9 : 1 betragen. Bei einem harten Material ist ein geringerer Abdeckanteil möglich als bei einem weichen Material des/der Abdeckelements/e.

Bei dem Verfahren kann vorteilhaft vorgesehen sein, dass bei dem Schleifvorgang in einem ersten Schleifschritt ein Anschliff mit einem Grobschliff durchgeführt wird, wobei mittels einer gröberen Schleifscheibe, d. h. mit einer gröberen Körnung, als bei den darauffolgenden Schleifschritten, eine makroskopisch plane Schleiffläche hergestellt wird. Hierbei werden die Schleiffläche des Aufsetzelements und die zu schleifende Seite der Probe derart geschliffen, dass sie in einer gemeinsamen, makroskopisch planen Schliffebene liegen, auf die der Anpressdruck im Wesentlichen gleichmäßig verteilt wirkt. Etwaige Ungenauigkeiten bei dem Einsetzen der Probe, beispielsweise leichte Verkantungen etc., werden durch diesen Verfahrensschritt ausgeglichen. So können, durch die grobe Körnung unter verhältnismäßig geringem Zeitaufwand, die Voraussetzungen für ein gleichmäßiges Schleifergebnis bei geringer Druckbelastung der Probe geschaffen werden. Durch ein verhältnismäßig weiches, z. B. aus Kunststoff hergestelltes Aufsetzelement kann dieser Verfahrensschritt beschleunigt und der Verschleiß der Schleifscheibe geringgehalten werden. Durch ein der Probenhärte bzw. deren Schleifwiderstand angepasstes Material des Aufsetzelements, z. B. Kunststoff, Metall und/oder Keramik, kann das Schleifergebnis optimiert werden.

Die Erfindung betrifft ferner ein Aufsetzelement und einen Grundkörper, die jeweils dazu ausgebildet sind, bei der Probenhaltervorrichtung verwendet zu werden, insbesondere jeweils gemäß der Ausbildungsvariante/n wie im Zusammenhang mit der Probehaltervorrichtung angegeben.

Nachfolgend wird die Erfindung anhand von Ausführungsbeispielen unter Bezugnahme auf die Zeichnungen näher erläutert. Es zeigen:
- Fig. 1A,B: eine erfindungsgemäße Probenhaltervorrichtung gemäß einem ersten Ausführungsbeispiel mit eingespannter Probe in perspektivischer Ansicht von oben (Fig. 1A) und die Positionierung der Probe auf der Tiefenanschlagvorrichtung schematisch von der Seite (Fig. 1B),
- Fig. 2A-C: einen Grundkörper gemäß einem zweiten Ausführungsbeispiel, zur Verwendung mit einer einzigen Tiefenanschlagvorrichtung, in perspektivischer Ansicht von unten (Fig. 2 A), von oben (Fig. 2 B) und von der Seite (Fig. 2 C) und
- Fig. 3A-C: zwei Aufsatzelemente zum Anbringen an dem Grundkörper gemäß den Fig. 2A-C in perspektivischer Ansicht (Fig. 3A), von unten (Fig. 3 B) und von der Seite (Fig. 3 C).

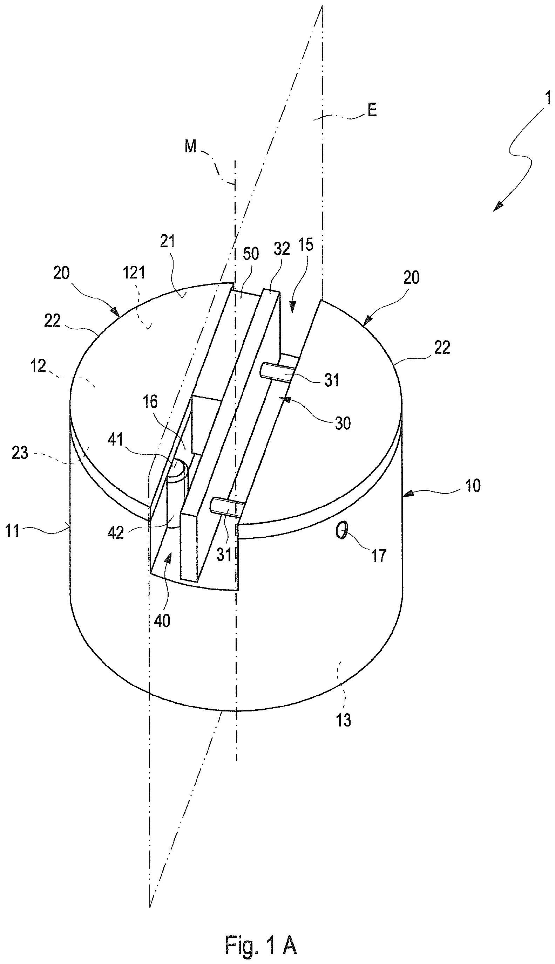

Fig. 1A zeigt eine Probenhaltervorrichtung 1, mittels welcher eine Probe 50 eines zu untersuchenden Materials ohne Einbetten gehalten und mittels einer Schleifeinrichtung bzw. Poliermaschine geschliffen und/oder poliert werden kann. Die Probenhaltervorrichtung 1 umfasst einen bezüglich einer Mittelachse M ausgerichteten Grundkörper 10. Der Grundkörper 10 weist eine Form auf, mit der er in die Schleifeinrichtung insbesondere formschlüssig einsetzbar ist. So ist der gezeigte Grundkörper 10 beispielhaft zylindrisch, mit seiner Grundform symmetrisch zu der Mittelachse M, ausgebildet. Der Grundkörper 10 weist eine im axial unteren Teil vollständig, im axial oberen Teil abschnittsweise umlaufende Umfangsfläche 11, eine Oberseite 12 und eine der Oberseite 12 gegenüberliegende Unterseite 13 auf. Für eine hohe Verschleißfestigkeit kann der Grundkörper 10 z. B. aus Metall, insbesondere Stahl bestehen. Eine günstige Materialalternative für eine einfache Fertigung ist Kunststoff.

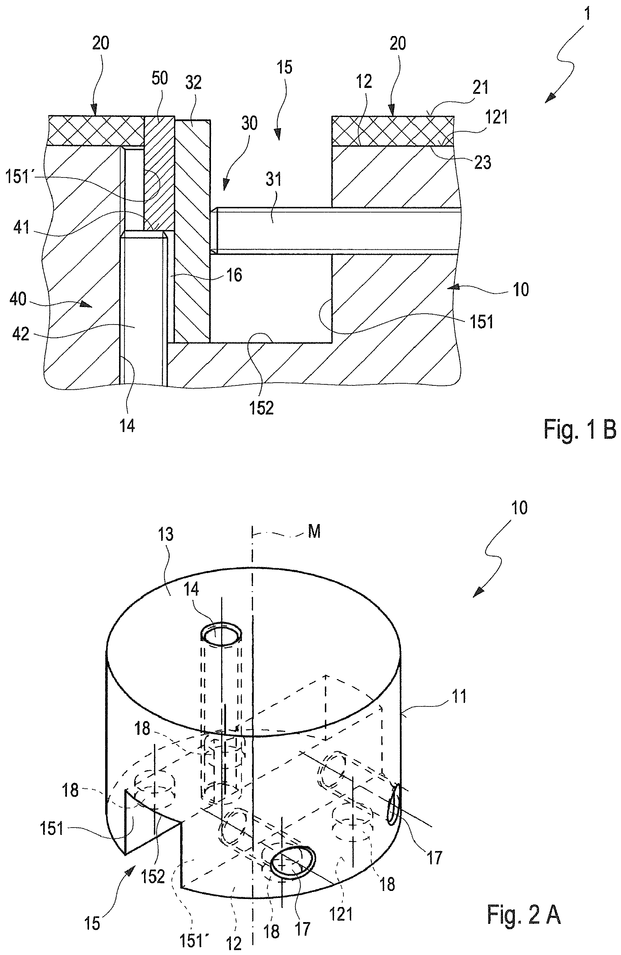

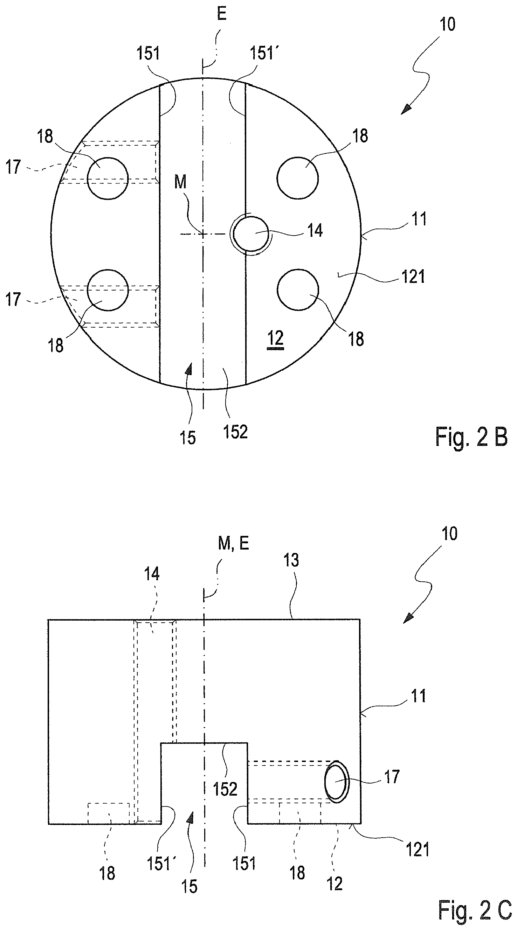

Der Grundkörper 10 umfasst eine in der Oberseite 12 eingebrachte Vertiefung 15. Die Vertiefung 15 ist vorliegend beispielhaft länglich als im Querschnitt rechteckförmige Nut ausgebildet, die nach ihren beiden an die Umfangsfläche 11 angrenzenden Seiten offen ausgebildet ist. Die Vertiefung 15 ist derart symmetrisch in den Grundkörper 10 eingebracht, dass eine Mittellängsebene E der Nut auf der Mittelachse M liegt. Alternativ kann die Nut mit ihrer Mittelebene M derart versetzt eingebracht sein, dass eine Mittelebene der Probe 50 (mit einer Dicke von z. B. 2 - 3 mm) in eingespanntem Zustand in etwa auf der Mittelachse M liegt (hier nicht gezeigt). Die Nut weist einen orthogonal zu der Mittelachse M ausgerichteten Boden 152 und zwei parallel zu der Mittellängsebene E bzw. zu der Mittelachse M ausgerichtete Seitenwände 151, 151' auf (vgl. Fig. 2A, B). An die Öffnung der Vertiefung 15 angrenzend ist die Oberseite 12 von der Oberseitenfläche 121 des Grundkörpers 10 gebildet, die orthogonal zu der Mittelachse M ausgerichtet ist. In der Vertiefung 15 ist ein Probeaufnahmeraum 16 gebildet, insbesondere zwischen einem parallel zur Mittellängsebene E flächigen Spannelement 32 und der Seitenwand 151', in den die zu schleifende Probe 50 einbringbar bzw. eingebracht ist. Zur Befestigung ist die Probe 50 mittels einer Spannvorrichtung 30 lösbar verspannt.

Wie Fig. 2A bis C genauer zeigen, sind in den Grundkörper 10 Befestigungs- bzw. Führungsstrukturen eingebracht. So sind in den Grundkörper 10 rechtwinklig zu der Seitenwand 151 ausgerichtete Gewindebohrungen 17 eingebracht, vorliegend beispielhaft zwei an der Zahl. Die Gewindebohrungen 17 münden ausgehend von der Umfangsfläche 11 in die Seitenwand 151 und dienen der Aufnahme von Spannmitteln 31 der Spannvorrichtung 30. Weiter ist in den Grundkörper 10 zumindest eine, insbesondere als Gewindebohrung ausgebildete, Führung 14 zur Führung einer Tiefenanschlagvorrichtung 40 eingebracht (vgl. Fig. 2A bis C), die sich von der Unterseite 13 bis in den Boden 152 erstreckt. Weiterhin weist der Grundkörper 10 an der Oberseite 12 Ausnehmungen 18 zur Befestigung von Aufsetzelementen 20 auf (vgl. Fig. 2B), vorliegend beispielhaft auf jeder Seite der Vertiefung zwei an der Zahl.

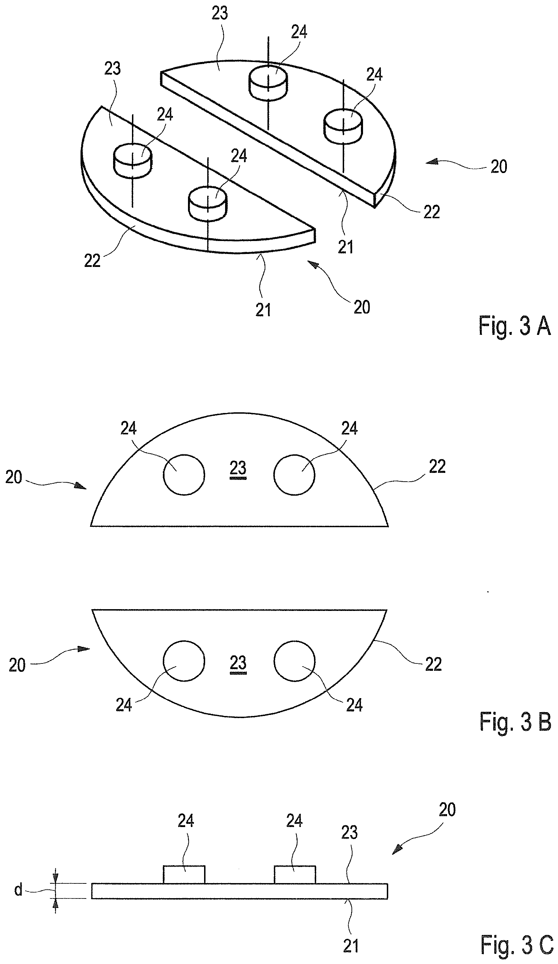

Auf der Oberseitenfläche 121 sind zwei flächige Aufsetzelemente 20 lösbar angeordnet, die in den Figuren 3A bis 3C separat dargestellt sind. Bei der montierten Probenhaltervorrichtung 1 gemäß Fig. 1A, B liegen die Aufsetzelemente 20 flächig mit Unterseiten 23 auf der Oberseitenfläche 121 des Grundkörpers 10 auf und grenzen beispielhaft an die Vertiefung 15 an. So sparen die beiden Aufsetzelemente 20 die Öffnung der Vertiefung 15 aus. Den Unterseiten 23 gegenüberliegend ist jeweils eine Schleiffläche 21 des Aufsetzelements 20 gebildet.

Zur lösbaren Befestigung der Aufsetzelemente 20 an dem Grundkörper 10 dienen Eingriffelemente 24, vorliegend für eine sichere, gleichmäßige Befestigung zwei pro Aufsetzelement 20. Die Eingriffelemente 24 sind einstückig, vorliegend beispielhaft zylindrisch, an die Aufsetzelemente 20 angeformt und stehen über deren Unterseiten 23 hervor. Die Eingriffelemente 24 bilden zapfenartige Fortsätze mit z. B. kreisförmigen Außenumfangskonturen, die mittels einer Presspassverbindung in die Ausnehmungen 18 mit komplementären Innenumfangskonturen an der Oberseite 12 des Grundkörpers 10 (vgl. Fig. 2 B) eingreifen. Durch diese Art der Befestigung ähnlich dem Klemmbausteinprinzip sind die Aufsetzelemente 20 einfach auf dem Grundkörper 10 befestigbar und bei Bedarf, insbesondere nach einem Schleifvorgang, z. B. mittels eines Greifwerkzeuges wie Zange oder Pinzette, wieder lösbar. Alternativ oder zusätzlich könnten die Aufsetzelemente 20 mittels einer lösbaren Klickverbindung mit elastisch verformbaren Eingriffselementen als Verbindungsstrukturen befestigt sein, um die Sicherheit gegen ein Herausfallen der Aufsetzelemente 20 zu erhöhen (hier nicht gezeigt). Dabei kann es für eine einfache Handhabbarkeit vorteilhaft sein, wenn die Aufsetzelemente 20 aus Kunststoff ausgebildet sind. Dieses Material bietet zugleich Kosten- und Herstellungsvorteile, wobei beispielsweise Spritzguss- oder 3-D-Druckverfahren anwendbar sind. Denkbar ist auch eine Anpassung des Materials der Aufsetzelemente 20 an das Probenmaterial (z. B. bzgl. der Härte bzw. des Schleifwiderstandes), um das Schleifergebnis zu optimieren. So können die Aufsetzelemente 20 auch aus Metall und/oder Keramik gefertigt sein.

Für eine gute Kräfteverteilung des Anpressdrucks während des Schleifvorgangs sind die Aufsetzelemente 20 großflächig ausgebildet. Vorliegend entspricht beispielhaft eine Außenkontur 22 der Aufsetzelemente 20 jeweils im Wesentlichen einer Außenkontur der Oberseitenfläche 121, sodass die Oberseitenfläche 121 zumindest im Wesentlichen vollständig von den Aufsetzelementen 20 bedeckt ist. Somit entspricht die Flächengröße der Aufsetzelemente 20 in Summe im Wesentlichen, z. B. mindestens 90 %, der Flächengröße der Oberseitenfläche 121. Beim Schleifvorgang bilden die Schleifflächen 21 der Aufsetzelemente 20 mit der Probe 50 eine (Schliff-)Ebene. Durch die großflächige Ausbildung der Aufsetzelemente 20 ergibt sich dabei vorteilhaft eine große Gesamtfläche, wodurch der Druck, d.h. die durch die Schleifeinrichtung aufgebrachte Kraft pro Fläche, verringert wird. Somit kann der Druck auf die Probe 50 vergleichsweise gering gehalten und so einer Zerstörung der Probe (z. B. einem Zerdrücken, "Zerbröseln" etc.) entgegengewirkt werden. Eine (denkbare) axiale Verstellbarkeit der Aufsetzelemente 20 ist nicht vorgesehen und nicht erforderlich. Zur Aufnahme des Anpressdrucks ist die Oberseitenfläche 121 im Vergleich zu der Flächengröße der Öffnung beispielsweise mindestens ebenso groß, vorzugsweise mindestens doppelt so groß, z. B. 2,9 mal so groß, ausgebildet.

Die Aufsetzelemente 20 weisen vor dem ersten Schleifvorgang vorzugsweise eine minimale Dicke d zwischen 0,5 mm und 5 mm, z. B. zwischen 1 mm und 2 mm auf. In diesem Bereich ergibt sich vorteilhaft ausreichend Verschleißmaterial bei einem Schleifvorgang. Insbesondere können Unebenheiten und/oder Überstände der Probe über die Schliffebene, die sich auch beim Verspannen ergeben können, durch einen "Anschliff" ausgeglichen werden, um zunächst eine gleichmäßige Schliffebene herzustellen.

Zur axialen Positionierung der Probe 50 ist in dem Probeaufnahmeraum 1 die axial verstellbare Tiefenanschlagvorrichtung 40 vorhanden. Die Tiefenanschlagvorrichtung 40 erlaubt ein vergleichsweise genaues axiales Vorpositionieren der Probe 50 für den Schleifvorgang. Dabei wird die Probe 50 derart positioniert, dass sich eine zu schleifende Seite axial in etwa auf Höhe der Schleifflächen 21 der Aufsetzelemente 20 befindet. Dadurch wird ein makroskopischer Überstand der Probe 50 über die Schleifflächen 21 der Aufsetzelemente 20 im Wesentlichen verhindert, die bei einer empfindlichen Probe zu einer Zerstörung der Probe (beispielsweise Zerbrechen) führen könnte. Die Tiefenanschlagvorrichtung 40 ermöglicht eine derartige Vorpositionierung insbesondere für Proben 50 unterschiedlicher Höhen bis zu einer maximalen Höhe der Tiefe des Probenraums (definiert durch die Höhe der Seitenwände 151, 151'), zuzüglich der Dicke d der Aufsetzelemente 20. So kann die Probenhaltervorrichtung 1 vorteilhaft für Proben 50 unterschiedlicher Größen verwendet werden.

Die Tiefenanschlagvorrichtung 40 umfasst zumindest ein Tiefenanschlagelement 42 mit einer Tiefenanschlagfläche 41, auf der die Probe 50 aufsteht. Gegebenenfalls können auch mehrere Tiefenanschlagelemente 42 bzw. Tiefenanschlagflächen 41, wie beispielsweise in Fig. 1A, B, vorhanden sein, wobei die Probe 50 in Fig. 1A, B aufgrund ihrer geringen Breite lediglich auf einer Tiefenanschlagfläche 41 aufsteht (vgl. schematisches Detail in Fig. 1B) und die zweite Tiefenanschlagfläche 41 unbenutzt ist. Vorliegend sind die Tiefenanschlagelemente 42 in einer einfach zu montierenden und materialsparenden Ausbildung durch eine bzw. zwei oder drei (hier nicht gezeigt) Schraube(n) gebildet. Die Tiefenanschlagflächen 41 sind durch die Stirnseiten der Schrauben gebildet. Die Schrauben sind von der Unterseite 13 des Grundkörpers 10 durch die axial gerichteten, durch Gewindebohrungen gebildete Führungen 14 geführt. So lässt sich die Tiefenanschlagvorrichtung 40 mit der Position der Tiefenanschlagfläche 41 bedarfsweise, je nach Probenmaß, durch Drehen der Schraube einfach axial verstellen. Die Führung 14 bzw. die Tiefenanschlagvorrichtung 40 ist vorzugsweise derart ausgebildet, dass sich eine glatte Unterseite 13 des Grundkörpers 10, ohne einen Überstand der Tiefenanschlagvorrichtung 40, ergibt. Dazu kann die Schraube bzw. können die Schrauben vorteilhaft als Madenschraube ausgebildet sein oder einen versenkbaren Kopf aufweisen. So kann auf der Unterseite 13 bei dem Schleifvorgang ein Anpressdruck mittels einer Anpressvorrichtung der Schleifeinrichtung ungehindert aufgebracht werden.

Die Spannvorrichtung 30 weist das mindestens eine Spannmittel 31 auf, mittels dessen/deren eine Spannkraft zum Halten der Probe 50 aufbringbar ist. Die Spannmittel 31 sind vorliegend durch zwei Schrauben gebildet, die jeweils durch die Gewindebohrungen 17 orthogonal zu der Mittelachse M verstellbar sind. Möglich wären für eine flexible und sichere Abstützung unterschiedlicher Probenformen (mit unterschiedlichen Breiten) auch z. B. drei Schrauben. Zudem weist die Spannvorrichtung 30 ein flächiges Spannelement 32 in Art einer Spannbacke auf, das vor Verspannen der Probe 50 lose oder vormontiert an dem Grundkörper 10 (z. B. an den Spannmitteln 31) angebracht sein kann. Zwischen dem Spannelement 32 und der Seitenwand 151' ist der Probenaufnahmeraum 16 gebildet, der durch das Spannelement 32 und die Spannmittel 31 in der Breite verstellbar ist. Mittels des Spannelements 32 ist die Probe 50 durch Aufbringen einer Spannkraft über die Spannmittel 31 gegen die Seitenwand 151' als Gegenfläche spannbar bzw. gespannt. Das Spannelement 32 kann beispielsweise in etwa die Flächenmaße einer der Seitenwände 151, 151' aufweisen. Dadurch können auch vergleichsweise großflächige Proben 50, z. B. mit einer Flächenausdehnung entsprechend der Seitenwand 151', flächig eingespannt werden. Das Spannelement 32 ist zumindest derart flächig ausgebildet, dass der Spanndruck auf der Probe 50 flächig verteilt wird, um eine Zerstörung der Probe 50, insbesondere ein Zerdrücken, zu vermeiden. Z. B. entspricht die Breite des Spannelements 32 der Breite der Probe 50 und ist das Spannelement 32 vorzugsweise zumindest so hoch wie die Vertiefung 15. Steht das Spannelement 32 über die Vertiefung 15 über, kann es bei dem Schleifvorgang abgeschliffen werden. Ferner ist das Spannelement 32 vorzugsweise aus einem derart harten Material, z. B. aus Stahl, ausgebildet, dass es den Spanndruck der Spannmittel 31 auf die Probe 50 übertragen kann. Die Spannkraft lässt sich so orthogonal zu der Anpresskraft der Schleifeinrichtung aufbringen. Eine derartige Ausbildung der Spannvorrichtung 30 erlaubt auch das Verspannen kleinvolumiger Proben 50 (Maße aller drei Dimensionen < 10 mm, beispielsweise 7 mm x 5 mm x 3 mm).

Zusätzlich zu den Aufsetzelementen 20 ist insbesondere die Kombination der vorhandenen verstellbaren Tiefenanschlagvorrichtung 40 mit der Spannvorrichtung 30, die eine Spannkraft orthogonal zu der Anpresskraft beim Schleifen aufbringt, vorteilhaft für das Schleifen empfindlicher Proben 50. Auf diese Weise kann die Druckkraft, die bei dem Schleifvorgang auf die Probe 50 einwirkt, sowohl durch die Spannkraft als auch durch die axial, parallel zu der Anpresskraft aufgebrachte Kraft über die Tiefenanschlagvorrichtung 30 kompensiert werden. So wird die Anpresskraft über verschiedene Kontaktpunkte abgeleitet, so das eine punktuell hohe Krafteinwirkung auf die Probe 50 vermieden wird, die zu einer Zerstörung der Probe 50 führen könnte. Durch die großflächigen Aufsetzelemente 20 wirkt zudem bereits eine vergleichsweise geringe zu kompensierende Anpressdruckkraft bei dem Schleifvorgang auf die Probe 50.

In den in den Fig. 1 und Fig. 2 gezeigten Ausführungsbeispielen definiert die Tiefenanschlagvorrichtung 40 die minimale Breite des Probeaufnahmeraums 16, indem die Längsseite(n) der Tiefenanschlagelemente 42 bzw. des Tiefenanschlagelements 42 als Anschlag für das Spannelement 32 wirkt/wirken. Um eine geringere minimale Breite zu erhalten sowie für eine große Auflagefläche der Tiefenanschlagfläche 41 angrenzend an die Seitenwand 151' sind die Tiefenanschlagelemente 42 bzw. das Tiefenanschlagelement 42 etwa hälftig in die Seitenwand 151 versenkt. Um die Breitenbegrenzung aufzuheben, könnte das flächige Spannelement 32 auf seiner in Richtung Tiefenanschlagfläche weisenden (Längs-) Seite eine Aussparung aufweisen, in die die Tiefenanschlagelemente 42 bzw. das Tiefenanschlagelement 42 axial hineinverstellbar sind/ist (hier nicht gezeigt).

Für den Schleifvorgang wird die Probe 50 zunächst in den Probeaufnahmeraum 16 zwischen die Seitenwand 151' und das Spannelement 32 eingebracht, wobei das Spannelement 32 noch keine oder eine geringe Spannkraft derart aufbringt, dass die Probe 50 noch bewegbar ist. Anschließend erfolgt die axiale Einstellung der Tiefenanschlagvorrichtung 40 derart, dass die zu schleifende Seite der Probe 50 in etwa, makroskopisch, auf Höhe der Schleifflächen 21 der Aufsetzelemente 20 positioniert ist. Hierzu kann optional eine Richtfläche verwendet werden, die auf die Schleifflächen 21 aufgelegt wird und die Probe 50 mittels der Tiefenanschlagvorrichtung 40 in der Höhe verstellt wird, bis sie ebenfalls in Kontakt mit der Richtfläche steht. Die zu schleifende Seite der Probe 50 kann unterhalb der Schleifflächen 21 der Aufsetzelemente 20, jedoch innerhalb der Dicke d der Aufsetzelemente 20, positioniert sein, sodass eine einheitliche Schliffebene der Probe 50 und der Aufsetzelemente 20 herstellbar ist. Ein makroskopisches Überstehen der Probe 50 über die Schleifflächen 21 ist zur Verhinderung einer Beschädigung der Probe 50 zu vermeiden. Im Anschluss an die axiale Positionierung wird mittels der Spannvorrichtung 30 eine Spannkraft auf die Probe 50 ausgeübt, um in Zusammenwirken mit einer Kraft aufgebracht durch die Tiefenanschlagvorrichtung 40 eine sichere Positionierung der Probe 50 während des Schleifvorgangs zu bewirken. Anschließend wird die Probenhaltervorrichtung 1 derart in die Schleifeinrichtung eingesetzt, dass die Schleifflächen 21 der Aufsetzelemente 20 in Kontakt zu der Schleifscheibe gelangen, und der Anpressdruck für den Schleifvorgang durch dafür vorgesehene Mittel der Schleifeinrichtung aufgebracht. Bei dem nun anschließenden Schleifvorgang wird in einem ersten Schleifschritt in einem Anschliff mittels einer groben Schleifscheibe, d. h. mit einer gröberen Körnung als in den darauffolgenden Schleifschritten, eine makroskopisch plane Schleiffläche hergestellt. Hierbei stellen die Schleifflächen der Aufsetzelemente 21 und die zu schleifende Seite der Probe 50 eine makroskopisch plane (Schliff-)Ebene her, auf die der Anpressdruck wirkt. Etwaige Ungenauigkeiten bei dem Einsetzen der Probe 50, beispielsweise leichte Verkantungen etc., bzw. Unebenheiten in der Probenoberfläche werden durch diesen Verfahrensschritt ausgeglichen. Durch verhältnismäßig weiche, z. B. aus Kunststoff hergestellte Aufsetzelemente 20 kann dieser Verfahrensschritt beschleunigt werden. In einem zweiten Schleifschritt und gegebenenfalls folgenden Schleifschritten kann nun ein Feinschliff durchgeführt werden, der zu einer mikroskopisch planen Ebene führt, der mikroskopische Untersuchungen der Mikrostruktur der Probe 50 ermöglicht.

Nach dem Schleifvorgang ist die Probe 50 einfach durch Lösen der Spannvorrichtung 30 aus der Probenhaltervorrichtung 1 entnehmbar. Je nach Schleiftiefe können bzw. müssen die Aufsetzelemente 20 für den nächst folgenden Schleifvorgang ersetzt werden. So bilden die Aufsetzelemente 20 Verbrauchsmaterial. Durch die Verwendung von beispielsweise Kunststoff sind diese jedoch kostengünstig herstellbar und einfach montierbar bzw. demontierbar.

Mit der erfindungsgemäßen Probenhaltervorrichtung 1 lassen sich somit auch kleinvolumige und/oder empfindliche, sowie poröse Proben 50 in einem Schleifvorgang für Materialforschungszwecke für die Untersuchung der Mikrostruktur vorbereiten.

## Patentansprüche

1. Probenhaltervorrichtung (1) für eine Schleifeinrichtung, mit einem bezüglich einer Mittelachse (M) ausgerichteten Grundkörper (10), der eine zu einer Oberseite (12) hin geöffnete Vertiefung (15) mit einem Probeaufnahmeraum (16) umfasst, und mit einer Spannvorrichtung (30) zum Verspannen einer Probe (50) in dem Probeaufnahmeraum (16), wobei an der Oberseite (12) des Grundkörpers (10) zumindest ein Aufsetzelement (20) zum Aufsetzen auf eine Schleifscheibe während des Schleifvorgangs lösbar angeordnet ist,
**dadurch gekennzeichnet,**
**dass** in dem Probeaufnahmeraum (16) eine axial verstellbare Tiefenanschlagvorrichtung (40) mit zumindest einer Tiefenanschlagfläche (41) zur axialen Positionierung der Probe (50) vorhanden ist.

2. Probenhaltervorrichtung (1) nach Anspruch 1,
**dadurch gekennzeichnet,**
**dass** die Tiefenanschlagfläche (41) durch die Stirnseite einer Schraube oder durch ein Flächenelement gebildet ist.

3. Probenhaltervorrichtung (1) nach Anspruch 1 oder 2,
**dadurch gekennzeichnet,**
**dass** das mindestens eine Aufsetzelement (20) großflächig ausgebildet ist, wobei eine nach oben gerichtete, von der Oberseite (12) abgewandte, Schleiffläche (21) des Aufsetzelements (20) größer als 80 %, insbesondere größer als 200 %, einer Schleiffläche der Probe (50) ausgebildet ist.

4. Probenhaltervorrichtung (1) nach einem der vorhergehenden Ansprüche,
**dadurch gekennzeichnet,**
**dass** zumindest zwei Aufsetzelemente (20) vorhanden sind, die derart angeordnet sind, dass sie die Öffnung der Vertiefung (15) aussparen.

5. Probenhaltervorrichtung (1) nach einem der vorhergehenden Ansprüche,
**dadurch gekennzeichnet,**
**dass** das bzw. die Aufsetzelement/e (20) aus einem Material weicher als die Probe (50), insbesondere aus einem Kunststoff, ausgebildet ist/sind.

6. Probenhaltervorrichtung (1) nach einem der vorhergehenden Ansprüche,
**dadurch gekennzeichnet,**
**dass** das bzw. die Aufsetzelement/e (20) vor dem ersten Schleifvorgang eine Dicke (d) von 0,5 mm bis 5 mm, vorzugsweise von 1 mm bis 4 mm, z. B. zwischen 1 und 2 mm, aufweist/aufweisen.

7. Probenhaltervorrichtung (1) nach einem der vorhergehenden Ansprüche,
**dadurch gekennzeichnet,**
**dass** das bzw. die Aufsetzelement/e mittels Presspassverbindung oder einer formschlüssigen Verbindung, z. B. einer Klickverbindung, an dem Grundkörper lösbar befestigt ist/sind.

8. Probenhaltervorrichtung (1) nach einem der vorhergehenden Ansprüche,
**dadurch gekennzeichnet,**
**dass** die Spannvorrichtung (30) Spannmittel (31) und ein flächiges Spannelement (32) aufweist, die derart angeordnet sind, dass eine Spannkraft auf die Probe (50) orthogonal zu einer ebenen Seitenwand (151') der Vertiefung (15) aufbringbar ist.

9. Probenhaltervorrichtung (1) nach Anspruch 8,
**dadurch gekennzeichnet,**
**dass** das flächige Spannelement (32) auf einer in Richtung Tiefenanschlagfläche (41) weisenden Seite eine Aussparung aufweist, in die die Tiefenanschlagfläche (41) parallel zu der Mittelachse (M) axial hineinverstellbar ist.

10. Probenhaltervorrichtung (1) nach einem der vorhergehenden Ansprüche,
**dadurch gekennzeichnet,**
**dass** die Vertiefung (15) länglich ausgebildet ist und zumindest nach einer Seite zu der Umfangsseite des Grundkörpers (10) hin geöffnet ist.

11. Probenhaltervorrichtung (1) nach einem der vorhergehenden Ansprüche,
**dadurch gekennzeichnet,**
**dass** in der Ebene der Oberseite (12) des Grundkörpers (10) das Verhältnis einer Oberseitenfläche (121) des Grundkörpers (10) zu der Größe der Öffnung der Vertiefung (15) mindestens 1 : 1, vorzugsweise mindestens 2 : 1 beträgt und
**dass** in montiertem Zustand das Aufsetzelement (20) zumindest 50 %, z. B. zumindest 70 % oder zumindest 90 % der Oberseitenfläche (121) abdeckt.

12. Verfahren zum Herstellen einer mikroskopisch planen Ebene an einer Probe (50) mittels einer Schleifeinrichtung unter Verwendung einer Probenhaltervorrichtung (1), insbesondere nach einem der vorhergehenden Ansprüche, bei dem
a. die Probe (50) in einen Probeaufnahmeraum (16) der Probenhaltervorrichtung (1) eingesetzt wird, wobei die Probe (50) mit einer zu schleifenden Seite makroskopisch auf axialer Höhe oder unterhalb einer Schleiffläche (21) eines Aufsetzelements (20) axial positioniert wird,
b. anschließend mittels einer Spannvorrichtung (30) eine Spannkraft auf die Probe (50) ausgeübt wird, die, gegebenenfalls in Zusammenwirken mit einer weiteren Kraft, eine sichere Positionierung der Probe (50) während eines Schleifvorgangs bewirkt,
c. anschließend die Probenhaltervorrichtung (1) derart in eine Schleifeinrichtung eingesetzt wird, dass die Schleiffläche (21) des Aufsetzelements (20) in Kontakt zu einer Schleifscheibe der Schleifeinrichtung gelangt und
d. anschließend in einem oder mehreren Schleifschritt/en ein Schliff zum Erhalt einer mikroskopisch planen Ebene an der Probe (50) für mikroskopische Untersuchungen der Mikrostruktur durchgeführt wird.

13. Verfahren nach Anspruch 12,
**dadurch gekennzeichnet,**
**dass** zwischen den Schritten c. und d. in einem ersten Schleifschritt ein Anschliff mit einem Grobschliff durchgeführt wird, wobei mittels einer gröberen Schleifscheibe als bei den darauffolgenden Schleifschritten eine makroskopisch plane Schleiffläche hergestellt wird.

14. Aufsetzelement (20), das dazu ausgebildet ist, bei einer Probenhaltervorrichtung (1) nach einem der Ansprüche 1 bis 11 verwendet zu werden.

15. Grundkörper (10), der dazu ausgebildet ist, bei einer Probenhaltervorrichtung (1) nach einem der Ansprüche 1 bis 11 verwendet zu werden.
